# EUROPEAN PATENT APPLICATION

(11) **EP 4 741 762 A1**
(43) Date of publication of application: **13.05.2026**
(21) Application number: 24212539.1
(22) Date of filing: 12.11.2024
(51) Int. Cl.: G01C 15/00, G01S 7/481, G01S 17/08

(54) **APPARATUS FOR MEASURING A DISTANCE TO A TARGET WITH FINE TUNING**

(71) Applicant: Hilti Aktiengesellschaft, 9494 Schaan (LI)
(72) Inventor: Gogolla, Torsten, 9494 Schaan (LI); Winter, Andreas, 6800 Feldkirch (AT); Sanchen, Guenter, 9472 Grabs (CH)
(74) Representative: Hilti Aktiengesellschaft Corporate Intellectual Property

(57) **Abstract**

Apparatus for measuring a distance between a reference point and a target, the apparatus comprising a distance measuring device including a beam source configured to emit a measuring beam, a detector configured to receive a reflected beam, and a control unit, and a beam forming device including at least one receiving element (R1, R2, R3, R4) configured to adapt the reflected beam, wherein the at least one receiving element (R1, R2, R3, R4) is movable in a motorized manner between a first position, in which the reflected beam is reduced to a first power that is non-zero, and a second position, in which the reflected beam is reduced to a second power that is non-zero, wherein the first power is different from the second power.

## Description

### Technical field

The present invention relates to an apparatus for measuring a distance between a reference point and a target according to the definition of claim 1, to a method for measuring a distance between a reference point and a target according to the definition of claim 12 and to a computer program according to the definition of claim 13.

### Background of the invention

Surveying instruments are known to assist in critical building and construction functions. For example, building foundations and retaining walls must be engineered and constructed within a certain degree of accuracy if they are to perform their desired functions in a proper manner and maintain structural integrity over time. Surveying instruments, such as total stations, robotic total stations, theodolites, laser beam measuring instruments, and similar instruments are often used to achieve the desired degree of accuracy and precision for these features and operations.

Surveying instruments usually include an apparatus for measuring a distance that provides a capability of measuring a distance between a reference point of the surveying instrument to a target with a measuring beam; the measuring beam can be a laser beam that is visible or infrared. Surveying instruments usually measure distances to retro-reflective targets, such as retro-reflective prisms, retro-reflective cat-eyes or retro-reflective foils, or to natural targets. To measure distances to retro-reflective targets, the power that is received at a detector has to be reduced, wherein the necessary reduction differs for the different types of retro-reflective targets (retro-reflective prisms, retro-reflective cat-eyes and retro-reflective foils) and for different ranges of distances (near, middle and large).

From prior art, different beam forming devices are known to reduce the power of the measuring beam and/or the power of the reflected beam in order to avoid overdriving of the detector. US 10,788,581 B2 and US 10,908,284 B2 disclose beam forming devices that include different forming elements that are adapted to different types of retro-reflective targets (retro-reflective prisms, retro-reflective cat-eyes and retro-reflective foils) and different ranges of distances. The forming elements include a receiving element to adapt the reflected beam and/or a transmitting element to adapt the measuring beam.

Drawback of the beam forming devices known from prior art is that each forming element has fixed forming properties. In order to change the forming properties, it is necessary to switch between the forming elements and arrange another forming element in the beam path of the reflected beam and the measuring beam. It is time consuming to identify the best forming element for a specific target and a specific distance, and there is a need for a beam forming device that allows to adapt the power that is received at the detector easier.

### Summary of the invention

The present invention has been made with the above-described background in mind, and it is, therefore, an object of the present invention to propose a beam forming device that allows to adapt the power that is received at the detector with less effort.

These objectives are achieved by realizing the features of the independent claims. Features which further develop the invention in an advantageous manner are described in the dependent claims.

According to an aspect of the present invention, there is provided an apparatus for measuring a distance between a reference point and a target, the apparatus comprising a distance measuring device and a beam forming device including at least one receiving element configured to adapt the reflected beam, characterized in that the at least one receiving element is movable in a motorized manner between a first position, in which the reflected beam is reduced to a first power that is non-zero, and a second position, in which the reflected beam is reduced to a second power that is non-zero, wherein the first power is different from the second power.

The at least one receiving element is configured as a forming element for the reflected beam. The term "reflected beam" is used for the measuring beam coming from the target. The target, at which the measuring beam is reflected, can be a retro-reflective prism, a retro-reflective cat-eye, a retro-reflective foil or a natural target. In case of a retro-reflective target, the reflected beam is a retro-reflected beam, and in case of a natural target, the reflected beam is a back scattered beam.

The receiving element can be formed as an aperture for the reflected beam that reduces the power of the reflected beam and thereby the power that is received at the detector of the distance measuring device. When the receiving element is arranged in the beam path of the reflected beam, the reflected beam can only partly transmit the receiving element. The power received at the detector can be adapted by changing the part of the surface area of the receiving element that is arranged in the reflected beam. By decreasing the surface area that can be transmitted the power received at the detector can decrease, and by increasing the surface area that can be transmitted the power received at the detector can increase.

Dependent on the type of the retro-reflective target and/or the range of distances between the reference point and the retro-reflective target, the amount of power received at the detector differs and can influence the distance measuring process. In order to avoid overdriving of the detector, the power received at the detector should be arranged below an upper limit, and in order to avoid understeering, the power received at the detector should be arranged above a lower limit.

Preferably, the receiving element can be moved in a motorized manner between more than two positions, including the first position and second position, in discrete steps or continuously. The distance between the reference point and the target can be measured in the first position, in the second position and in positions between the first position and second position. The receiving element can be moved by rotation or by translation.

Preferably, while moving the at least one receiving element from the first position to the second position, the power of the reflected beam that is received at the detector is non-zero for positions between the first position and second position. The receiving element can be moved from the first position to the second position in discrete steps or continuously. When the power of the reflected beam that is received at the detector is non-zero for positions between the first position and second position, understeering of the detector is avoided and the process of finding an appropriate beam forming set-up can be accelerated.

In a preferred embodiment, the at least one receiving element is configured to be arranged in a starting position, in which the power of the reflected beam received at the detector is non-zero, and configured to have a surface area arranged in the reflected beam that is increasing, when the receiving element is moved from the starting position in a first direction, and a surface area arranged in the reflected beam that is decreasing, when the receiving element is moved from the starting position in a second direction opposite to the first direction.

By using a starting position for the receiving element, the power that is received at the detector can be adapted to the preferred power range. If the power received at the detector is below a lower limit, the receiving element is moved from the starting position in the first direction, in which the surface area arranged in the reflected beam and thereby the power received at the detector is increasing, and if the power received at the detector is above an upper limit, the receiving element is moved from the starting position in the second direction, in which the surface area arranged in the reflected beam and thereby the power received at the detector is decreasing. The dynamic of change while moving the receiving element from the starting position in the first direction or second direction can be a linear change or a progressive change.

Preferably, the at least one receiving element has a dynamic of change that is a progressive change, when moving in the first direction or second direction. A progressive change of the dynamic change allows to adapt the power received at the detector very fast, only small movement of the receiving element is necessary to change (increase or decrease) the surface area that is arranged in the beam path of the reflected beam and thereby the power received at the detector.

In a preferred embodiment, the at least one receiving element is a pattern of openings. By using a receiving element that is a pattern of openings, the openings can be distributed over the reflected beam such that variations in the reflected beam can be considered. Triangular shaped opening can be used to have a progressive change of the surface area that is arranged in the beam path of the reflected beam.

Preferably, the at least one receiving element includes a first receiving element configured to adapt the reflected beam to a first type of targets and/or to a first range of distances, and a second receiving element configured to adapt the reflected beam to a second type of targets and/or to a second range of distances. By using a first receiving element and a second receiving element that reduce the reflected beam to different first and second powers, the beam forming device can be adapted to at least two different beam forming set-ups to adapt the reflected beam and thereby the power received at the detector.

Preferably, the at least one receiving element further includes a third receiving element configured to adapt the reflected beam to a third type of target and/or to a third range of distances. By using first, second and third receiving elements that reduce the reflected beam to different first, second and third powers, the beam forming device can be adapted to at least three different beam forming set-ups to adapt the reflected beam and thereby the power received at the detector.

In a preferred embodiment, the beam forming device further includes at least one transmitting element configured to adapt the measuring beam, the at least one transmitting element is movable in a motorized manner between a first position and a second position that is different from the first position.

Preferably, the at least one transmitting element includes a first transmitting element configured to adapt the measuring beam to a first type of targets and/or to a first range of distances, and a second transmitting element configured to adapt the measuring beam to a second type of targets and/or to a second range of distances. By using a first transmitting element and a second transmitting element, the beam forming device can be adapted to at least two different beam forming set-ups to adapt the measuring beam and thereby the power received at the detector.

Preferably, the at least one transmitting element further includes a third transmitting element configured to adapt the measuring beam to a third type of targets and/or to a third range of distances. By using a first, second and third transmitting element, the beam forming device can be adapted to at least three different beam forming set-ups to adapt the measuring beam and thereby the power received at the detector.

According to a further aspect of the present invention, there is provided a method for measuring a distance between a reference point and a target using the apparatus according to the present invention, the method is performed by a computer system of the apparatus and comprises the following steps:
▪ Instructing the apparatus to arrange the at least one receiving element in a starting position,
▪ Instructing the distance measuring device to measure the distance between the reference point and the target, and
▪ Evaluating the measurement of the distance by comparing the power of the reflected beam received at the detector with a lower limit and an upper limit.

The method for measuring a distance between a reference point and a target according to the present invention allows to adapt the surface area of the receiving element that is arranged in the reflected beam and thereby the power that is received at the detector.

The next steps of the method depend on evaluating the measurement. If the power of the reflected beam received at the detector is below the lower limit or above the upper limit, the method is continued, and if the power of the reflected beam received at the detector is above the lower limit and below the upper limit, the method is finished.

If the power received at the detector is below the lower limit, the receiving element is moved in a direction, in which the surface area arranged in the beam path of the reflected beam and thereby the power received at the detector is increasing, and the distance measurement is repeated. If the power received at the detector is above the upper limit, the receiving element is moved in a direction, in which the surface area arranged in the beam path of the reflected beam and thereby the power received at the detector is decreasing, and the distance measurement is repeated.

According to a further aspect of the present invention, there is provided a computer program comprising instructions, which, when executed by a computer system, cause the computer system to carry out the method for measuring a distance between a reference point and a target according to the present invention.

The computer program may be stored on the computer system or on a computer-readable medium communicatively connected to the computer system. The term "computer-readable medium" includes, but is not limited to, portable or non-portable storage devices, optical storage devices, and various other mediums capable of storing, containing, or carrying instruction(s) and/or data.

### Brief Description of the drawings

The aspects of the invention are described or explained in more detail below, purely by way of example, with reference to working examples shown schematically in the drawing. Identical elements are labelled with the same reference numerals in the figures. The described embodiments are generally not shown true in scale, and they are also not to be interpreted as limiting the invention. Specifically,
- FIG. 1: shows an operator using a total station deployed at a worksite, the total station comprising a measuring unit mounted on a tripod and a remote controller connected via a communication link to the measuring unit,
- FIG. 2: show an exemplary version of the measuring unit of the total station of FIG. 1,
- FIGS. 3A-C: show three different types of targets that are formed as retro-reflective prisms (FIG. 3A), as retro-reflective cat-eyes (FIG. 3B) and as retro-reflective foils (FIG. 3C),
- FIGS. 4A, B: show an exemplary version of an apparatus for measuring a distance between a reference point and a target according to the present invention, the apparatus including a beam forming device and a distance measuring device having a coaxial arrangement,
- FIG. 5: shows an exemplary version of a rotating wheel that can be used in the apparatus of FIG. 4, the rotating wheel including four forming elements,
- FIGS. 6A-C: show one of the forming elements of the rotating wheel of FIG. 5 arranged in a starting position (FIG. 6A), in a position rotated in a first direction (FIG. 6B), and in a position rotated in a second direction opposite to the first direction (FIG. 6C), and
- FIG. 7: shows an alternative exemplary version of an apparatus for measuring a distance between a reference point and a target according to the present invention, the apparatus including a beam forming device and a distance measuring device having a para-axial arrangement.

### Detailed Description

Reference will now be made in detail to the present preferred embodiment, an example of which is illustrated in the accompanying drawings. It is to be understood that the technology disclosed herein is not limited in its application to the details of construction and the arrangement of components set forth in the following description or illustrated in the drawings. The technology disclosed herein is capable of other embodiments and of being practiced or of being carried out in various ways.

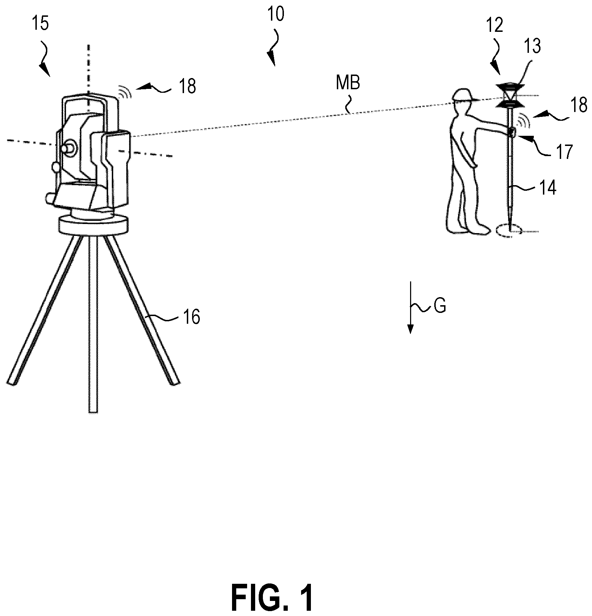

**FIG. 1** shows an operator using a surveying instrument **10** deployed at a worksite. The worksite may be a construction site, inside or outside, or a surveying site, amongst others. In addition to the surveying instrument 10, a target **12** that is remote from the surveying instrument 10 may be deployed at the worksite 11. The target 12 is configured to reflect any laser beam or light emitted by the surveying instrument and may include a retro-reflective target **13,** such as a retro-reflective prism, a retro-reflective cat-eye and/or a retro-reflective foil, that is mounted on top of a pole **14.**

The surveying instrument 10 is formed as a total station and comprises a measuring unit **15** that is mounted on a mounting support structure in the form of a tripod **16.** The surveying instrument 10 also comprises a removable control panel in the form of a remote controller **17** that can be used for remote control of the measuring unit 15 via a wireless connection **18.**

The total station 10 includes an apparatus for measuring a distance that provides a capability of measuring a distance between a reference point of the total station to a target with a measuring beam **MB;** the measuring beam MB can be a laser beam that is visible or infrared. The total station further includes a first angle measuring device that provides a capability of measuring an azimuth angle (first angle) of the measuring beam MB in a horizontal plane that is substantially perpendicular to a local gravity vector **G** and a second angle measuring device that provides a capability of measuring an elevation angle of the measuring beam in a vertical plane that is substantially parallel to the local gravity vector G.

Before the operator can use the total station 10 for layouting, measuring and/or other applications, the total station 10 must be stationed via a stationing process to the jobsite 11. From prior art, different stationing processes are known, such as free-stationing processes, model-based stationing processes, automatic stationing processes, or any other stationing process.

Free-stationing processes use a set of at least two control points having known coordinates in an external coordinate frame to determine the pose vector of the total station; the control points can be materialized by retro-reflective prisms, retro-reflective cat-eyes, retro-reflective foils, or other forms of retro-reflective targets for returning any laser beam or light emitted by the total station. For the control points, the total station measures angle and distance data, which can be transferred to Euclidian coordinates. For two control points, the pose vector can be computed analytically, and for three or more control points, the pose vector can be computed by least-square estimation of Euclidian transformation between two different point patterns.

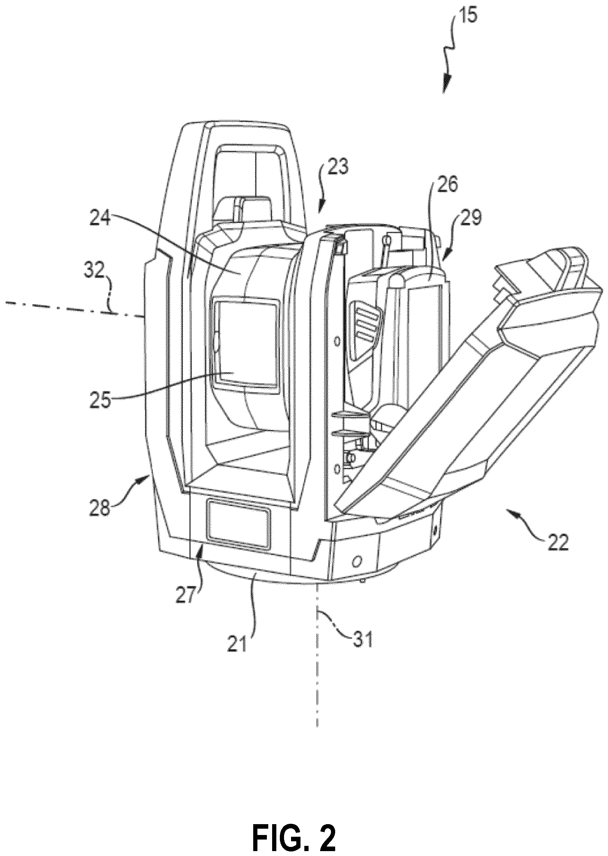

**FIG. 2** shows an exemplary version of the measuring unit 15 of FIG. 1 in a perspective view. The measuring unit 15 comprises a base **21,** a support **22,** and a measuring head **23.** The measuring head 23 is enclosed by a housing **24,** which includes an exit window **25.**

In the housing 24, a distance measuring device that can emit a distance measuring beam and a tracking device that can emit a radiation are arranged. The distance measuring beam and the radiation are emitted through the exit window 25 to leave the housing 24.

In the exemplary version of FIG. 2, the support 22 is U-formed and includes a bottom portion **27,** a first side portion **28,** and a second side portion **29.** The support 22 can rotate completely around its circumference at a full 360° angle with respect to the base 21 about a first axis of rotation **31.** The measuring head 23 is pivotably mounted to the support 22 about a second axis of rotation **32** and is arranged between the first side portion 28 and the second side portion 29 of the support. Usually, the first axis of rotation 31 is aligned perpendicular to the second axis of rotation 32.

An azimuth motor device and a first angle encoder may be located in the bottom portion 27 of the support 22 and allow to rotate the support 22 about the first axis of rotation 31 and to determine the direction of the distance measuring beam in a first plane perpendicular to the first axis of rotation 31. An elevation motor device and a second angle encoder may be located in the first side portion 28 of the support 22 and allow the measuring head 23 to pivot about the second axis of rotation 32 and to determine the direction of the distance measuring beam in a second plane perpendicular to the second axis of rotation 32. To make the instrument 12 fully automatic, a self-leveling device, which may be arranged in the bottom portion 27 of the support 22, can be included.

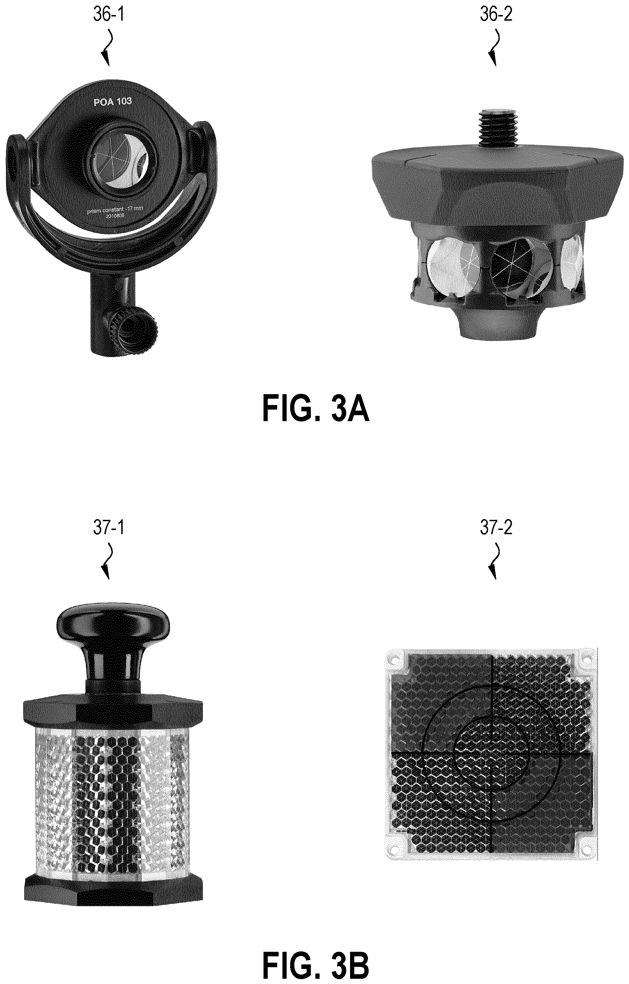

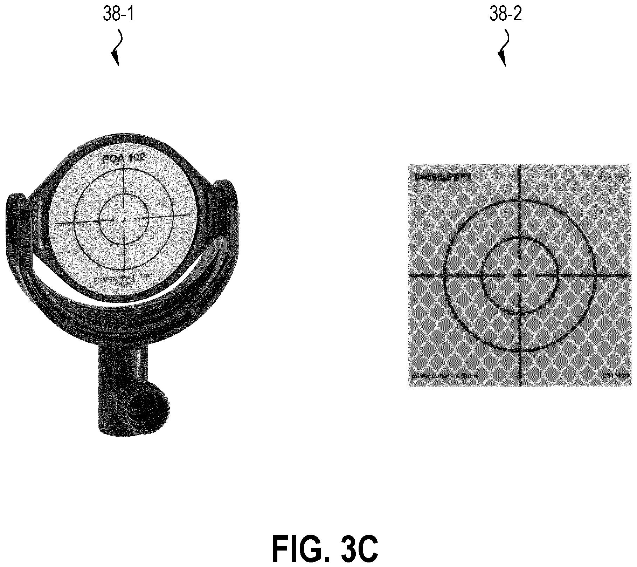

Surveying instruments, such as the total station 10, usually measure distances to retro-reflective targets, such as retro-reflective prisms, retro-reflective cat-eyes or retro-reflective foils, or to natural targets. **FIGS. 3A-C** show three different types of targets that are formed as retro-reflective prisms **36-1, 36-2** (FIG. 3A), as retro-reflective cat-eyes **37-1, 37-2** (FIG. 3B) and as retro-reflective foils **38-1, 38-2** (FIG. 3C).

To measure distances to retro-reflective targets, the power that is received at a detector has to be reduced, wherein the necessary reduction differs for the different types of retro-reflective targets (retro-reflective prisms, retro-reflective cat-eyes and retro-reflective foils) and for different ranges of distances (near, middle and large).

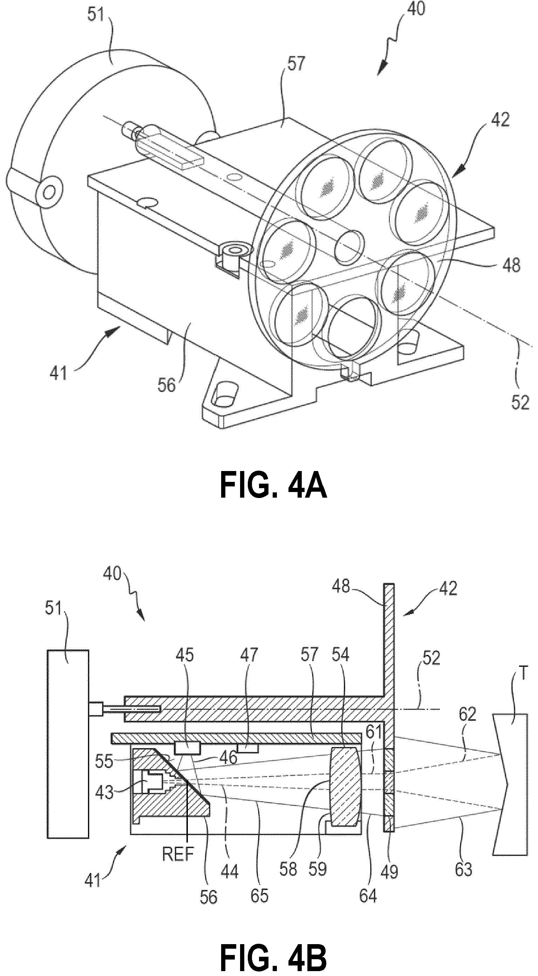

**FIG. 4A****, B** show an exemplary version of an apparatus **40** for measuring a distance between a reference point REF and a target according to the present invention. The apparatus 40 can be used in the total station 10 of FIG. 1 to provide the distance measuring functionality.

The apparatus 40 includes a distance measuring device **41** and a beam forming device **42.** The distance measuring device 41 includes a beam source **43** configured to emit a measuring beam **44,** a detector **45** configured to receive a reflected beam **46,** and a control unit **47** configured to determine the distance between the reference point REF and a target T, at which the measuring beam 44 was reflected and formed into the reflected beam 46.

The beam forming device 42 includes a rotating wheel **48** including several forming elements **49** that are configured to adapt the measuring beam and/or the reflected beam, wherein the rotating wheel 48 is movable in a motorized manner via a motor device **51** of the beam forming device 42 about an axis of rotation **52.** Instead of the rotating wheel 48 that is movable by rotation about the axis of rotation 52, the beam forming device 42 may include a slider that is movable by translation along an axis of translation.

The distance measuring device 41 of FIG. 4 shows a coaxial arrangement of the measuring beam 44 and the reflected beam 46. The distance measuring device 41 includes, besides the beam source 43, the detector 45 and the control unit 47, a beam shaping optic **54,** a beam splitting optic **55,** an optics carrier **56** and a circuit board **57.** The beam shaping optic 54 includes a transmitter lens **58** for shaping the measuring beam 44 and a receiver lens **59** for shaping the reflected beam 46, the transmitter lens 58 and receiver lens 59 are integrated into a common optical element. The beam source 43, the beam shaping optic 54 and the beam splitting optic 55 are mounted on the optics carrier 56 and the detector 45 is mounted to the circuit board 57, which is connected to the optics carrier 56.

The beam source 43 transmits the measuring beam 44, which is directed onto the beam splitting optic 55. The measuring beam 44 is transmitted at the beam splitting optic 55 and impinges on the transmitter lens 58, where a first beam shaping takes place. The transmitter lens 58 is embodied as a collimating lens, which collimates the measuring beam 44 and directs it as a collimated beam **61** onto the laser beam shaping element 48. The optical characteristics of the collimating lens 58 are aligned with measuring the distance of natural targets. The collimated laser beam 61 impinges on a forming element 49 of the rotating wheel 48, that is arranged in the beam path of the collimated beam 61 and where a second beam shaping occurs. The deflected beam **62** impinges on the target T, which is a retro-reflective prism, and is reflected towards the distance measuring device 41.

A reflected beam **63** impinges on the forming element 49, which is arranged in the beam path of the reflected beam 63 and directs it as a shaped reflected beam **64** onto the receiver lens 59, at which a further beam shaping of the reflected beam 64 occurs. The twice shaped reflected beam **65** is directed onto the beam splitting optic 55 and deflected at the beam splitting optic 55. The deflected beam 65 impinges as reflected beam on the detector 45. The beam splitting optic 55 ensures that the optical axis of the reflected beam 46 and the optical axis of the measuring beam 44 are different from one another.

The targets, at which measuring beams are reflected, include retro-reflective prisms such as the retro-reflective prisms 36-1, 36-2, retro-reflective cat-eyes such as the retro-reflective cat-eyes 37-1, 37-2, and retro-reflective foils such as the retro-reflective foils 38-1, 38-2. To optimize the process of measuring a distance to a retro-reflective target it is preferred to have specific receiving elements for the different types of retro-reflective targets.

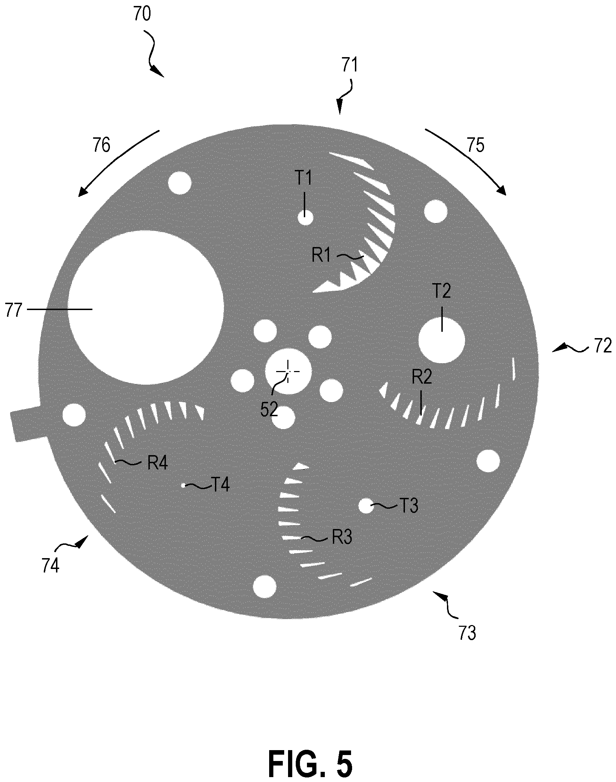

**FIG. 5** shows an exemplary version of a rotating wheel **70** that can substitute the rotating wheel 48 of the apparatus 40. The rotating wheel 70 is configured to be used together with a distance measuring device having a coaxial arrangement of the measuring beam and the reflected beam, such as the distance measuring device 41.

The rotating wheel 70 is used to adapt the power that is received at the detector. In order to bring the power received at the detector in a preferred range between a lower limit and an upper limit, the reflected beam can be adapted and additionally the measuring beam can be adapted. Adapting the reflected beam means particularly that the power of the reflected beam is reduced by using a receiving element as aperture in the reflected beam, and by moving the receiving element in the beam path of the reflected beam the power can be changed (increasing or decreasing).

The rotating wheel 70 includes four forming elements **71, 72, 73, 74** that are configured to adapt the measuring beam 44 and/or the reflected beam 46 to retro-reflective targets, such as the retro-reflective targets 36-1, 36-2, 37-1, 37-2, 38-1, 38-2. The number of forming elements may be adapted to the number of different types of retro-reflective targets and/or to the number of different ranges of differences between the reference point and the target.

The forming elements 71-74 of the rotating wheel 70 are called first forming element 71, second forming element 72, third forming element 73, and fourth forming element 74. The rotating wheel 70 can be rotated about the axis of rotation 52 in a first direction **75** or in a second direction **76** opposite to the first direction 75.

The first forming element 71 includes a first receiving element **R1** configured to adapt the reflected beam 46 and a first transmitting element **T1** configured to adapt the measuring beam 44, the second forming element 72 includes a second receiving element **R2** configured to adapt the reflected beam 46 and a second transmitting element **T2** configured to adapt the measuring beam 44, the third forming element 73 includes a third receiving element **R3** configured to adapt the reflected beam 46 and a third transmitting element **T3** configured to adapt the measuring beam 44, and the fourth forming element 74 includes a fourth receiving element **R4** configured to adapt the reflected beam 46 and a fourth transmitting element **T4** configured to adapt the measuring beam 44.

The receiving elements R1 to R4 include a pattern of ten individual openings that are triangularly shaped and arranged on a circular arc. By using receiving elements formed as pattern of openings, the openings can be distributed over the reflected beam such that variations in the reflected beam can be considered. The triangular shaped openings allow to have a progressive change of the surface area that is arranged in the beam path of the reflected beam. The progressive change of the dynamic change allows to adapt the power received at the detector very fast, only small movement of the receiving element is necessary to change (increase or decrease) the surface area and thereby the power received at the detector.

The surface area of the first receiving element R1 is three-times larger than the surface areas of the second, third and fourth receiving elements R2, R3, R4. The transmitting elements T1 to T4 are circularly shaped and create different laser beam divergencies depending on the diameter of the circle.

For measuring distances to retro-reflective foils, such as the retro-reflective foils 38-1, 38-2, the first forming element 71 is preferred to be used for small or medium distances. For large distances (e.g. > 30 m) it is preferred to use the second forming element 72 with smaller laser beam divergency, because the laser spot on the planar target should not be too big (e.g. diameter < 2 cm).

For measuring distances to retro-reflective cat-eyes, such as the retro-reflective cat-eyes 37-1, 37-2, the third forming element 73 is preferred to be used for small or medium distances. The third forming element 73 has a bigger receiving attenuation (smaller triangles) than the first forming element 71. It is needed because retro-reflective cat-eyes reflect more power than retro-reflective foils. For large distances (e.g. > 30 m) it is preferred to use the second forming element 72 with smaller laser beam divergency, because the laser spot on the planar target should not be too big (e.g., diameter < 2 cm).

For measuring distances to retro-reflective prisms, such as the retro-reflective prisms 36-1, 36-2, the fourth forming element 74 is applied for small or mediums distances (e.g. < 30 m) because a big laser beam divergency is needed in order to get not too small beam spots on the prism. For large distances the third forming element 73 is preferred to be used because the smaller laser beam divergency deliver still a proper beam spot diameter. But the overall attenuation is smaller (more laser power because of bigger laser aperture) which is preferred at large distances.

In addition to the forming elements 71, 72, 73, 74, the rotating wheel 70 further includes an opening **77,** in which no forming element is inserted and no forming of the measuring beam and/or the reflected beam occurs. The opening 77 is configured to be used for measuring a distance to a target that is a natural target.

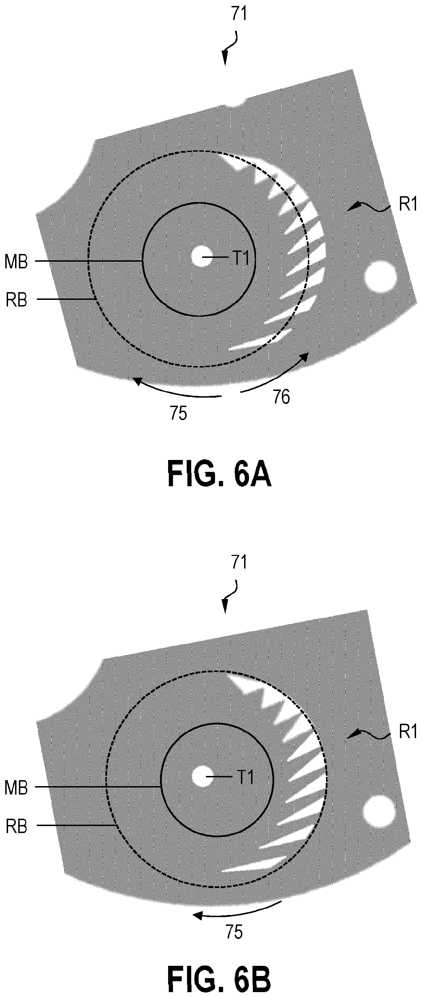

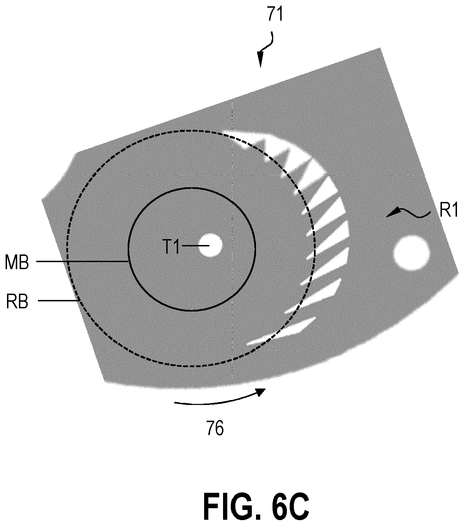

**FIGS. 6A-C** show the first forming element 71 of the rotating wheel 70 of FIG. 5 in three different positions, in a starting position (FIG. 6A), in a position rotated in the first direction 75 (FIG. 6B), and in a position rotated in the second direction 76 (FIG. 6C). Besides the first forming element 71, the reflected beam and the measuring beam are shown; the measuring beam is shaped as an inner circle **MB** and the reflected beam is shaped as an outer ring **RB.**

The first forming element 71 includes the first receiving element R1 configured to adapt the reflected beam and a first transmitting element T1 configured to adapt the measuring beam, which are integrated in a common beam forming element. The first transmitting element T1 is movable together with the first receiving element R1 at least between a first position and a second position.

FIG. 6A shows the first forming element 71 in the starting position, which is characterized in that the power of the reflected beam received at the detector 45 is non-zero. In the starting position, the openings of the first receiving element R1 are partly arranged in the reflected beam and the power of the reflected beam is reduced to the half surface area of the first receiving element R1.

Using a starting position that has a limited surface area allows to adapt the surface area, that is arranged in the reflected beam, in both directions, in the first direction 75 and in the second direction 76. Otherwise, using a starting position that has the full surface area allows to determine if the receiving element is suitable for distance measuring. If the power received at the detector is below the lower limit, the receiving element is not qualified to adapt the reflected beam such that the power is within the preferred power range. In that case, another receiving element can be arranged in the beam path of the reflected beam.

When the first receiving element R1 is moved from the starting position in the first direction 75, the surface area that is arranged in the reflected beam is increasing, and when the first receiving element R1 is moved from the starting position in the second direction 76 opposite to the first direction 75, the surface area that is arranged in the reflected beam is decreasing.

In the position shown in FIG. 6B, the openings of the first receiving element R1 are fully arranged in the reflected beam and the power of the reflected beam is reduced to the full surface area of the first receiving element R1. By rotating the rotating wheel 70 from the starting position in the first direction 75, the surface area of the first receiving element R1 that is arranged in the reflected beam is increasing.

In the position shown in FIG. 6C, the openings of the first receiving element R1 are partly arranged in the reflected beam and the power of the reflected beam is reduced to about 10 % of the full surface area of the first receiving element R1. By rotating the rotating wheel 70 from the starting position in the second direction 76, the surface area of the first receiving element R1 that is arranged in the reflected beam is decreasing.

The power received at the detector of the distance measuring device can be adapted by changing the part of the surface area of the first receiving element R1 that is arranged in the reflected beam. By decreasing the surface area that can be transmitted the power received at the detector can decrease, and by increasing the surface area that can be transmitted the power received at the detector can increase.

The first receiving element R1 may be movable in a motorized manner between five positions, which may correspond to 100 % of the full surface area of the first receiving element R1, to 80 % of the full surface area of the first receiving element R1, to 60 % of the full surface area of the first receiving element R1, to 40 % of the full surface area of the first receiving element R1, and to 20 % of the full surface area of the first receiving element R1. In another alternative version, the first receiving element R1 may be movable in a motorized manner in all positions between 100 % of the full surface area of the first receiving element R1 and 0 % of the full surface area of the first receiving element R1.

To adapt the power of the reflected beam that is received at the detector 45, a method for measuring a distance between a reference point and a target, which can be a retro-reflective prism, a retro-reflective cat-eye, a retro-reflective foil or a natural target, using the apparatus 40 for measuring a distance is performed. The method is performed by a computer system of the apparatus 40 and comprises the following steps:
▪ Instructing the apparatus 40 to arrange the receiving element in a starting position,
▪ Instructing the distance measuring device 41 to measure the distance between the reference point REF and the target, and
▪ Evaluating the measurement by comparing the power of the reflected beam received at the detector 45 with a lower limit and an upper limit.

The further steps of the method depend on the result of evaluating the measurement. If the power received at the detector 45 is below the lower limit or above the upper limit, the method is continued, and if the power received at the detector 45 is above the lower limit and below the upper limit, the method is finished.

The starting position can be selected such that 50 % of the full surface area of the receiving element are arranged in the beam path of the reflected beam. If the power received at the detector 45 is below the lower limit, the receiving element is rotated such that the surface area that is arranged in the beam path of the reflected beam increases, and if the power received at the detector 45 is above the upper limit, the receiving element is rotated such that the surface area that is arranged in the beam path of the reflected beam decreases. Those steps are repeated until the measured power is above the lower limit and below the upper limit.

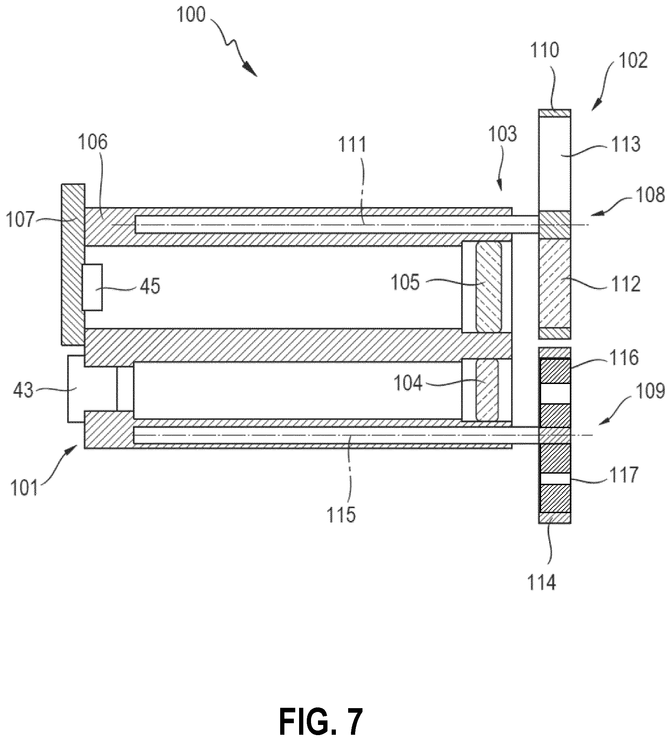

**FIG. 7** shows an alternative exemplary version of an apparatus **100** for measuring a distance between a reference point and a target according to the present invention. The apparatus includes a distance measuring device **101** and a beam forming device **102.** The distance measuring device 101 differs from the distance measuring device 40 of FIG. 4 in that the path of the measuring beam and the reflected beam are arranged in a parallel offset manner.

The distance measuring device 101 comprises, besides the beam source 43, the detector 45, and the control unit (not shown), a beam-shaping optic **103** including a transmitter lens **104** for shaping the measuring beam and a receiver lens **105** for shaping the reflected beam, an optics carrier **106** and a circuit board **107.** The beam source 43, the transmitter lens 104, and the receiver lens 105 are attached to the optics carrier 106, and the detector 45 is attached to the circuit board 107.

The beam forming device 102 includes a first forming device **108** configured to adapt the reflected beam and a second forming device **109** configured to adapt the measuring beam. The first forming device 108 includes a first rotating wheel **110** that is rotatable in a motorized manner about a first axis of rotation **111** and includes a first receiving element **112** and a second receiving element **113.** The second forming device 109 includes a second rotating wheel **114** that is rotatably in a motorized manner about a second axis of rotation **115** and includes a first transmitting element **116** and a second transmitting element **117.**

Instead of the first rotating wheel 110 that is movable by rotation about the first axis of rotation 111, the beam forming device 102 may include a first slider that is movable by translation along a first axis of translation, and instead of the second rotating wheel 114 that is movable by rotation about the second axis of rotation 115, the beam forming device 102 may include a second slider that is movable by translation along a second axis of translation.

The first receiving element 112 may be configured to adapt the reflected beam to a first type of targets and/or to a first range of distances, and the second receiving element 113 may be configured to adapt the reflected beam to a second type of targets and/or to a second range of distances. In addition to the first and second receiving elements 112, 113, the first rotating wheel 110 can further include a first opening (not shown), in which no receiving element is inserted, and no forming of the reflected beam occurs; the first opening is configured to be used for measuring a distance to a target that is a natural target.

The first receiving element 112 is movable in a motorized manner between a first position, in which the reflected beam is reduced to a first power that is non-zero, and a second position, in which the reflected beam is reduced to a second power that is non-zero, wherein the first power is different from the second power. The second receiving element 113 is movable in a motorized manner between a first position, in which the reflected beam is reduced to a first power that is non-zero, and a second position, in which the reflected beam is reduced to a second power that is non-zero, wherein the first power is different from the second power.

The first transmitting element 116 may be configured to adapt the measuring beam to a first type of targets and/or to a first range of distances, and the second transmitting element 117 may be configured to adapt the measuring beam to a second type of targets and/or to a second range of distances. In addition to the first and second transmitting elements 116, 117, the second rotating wheel 114 can further include a second opening (not shown), in which no transmitting element is inserted, and no forming of the measuring beam occurs; the second opening is configured to be used for measuring a distance to a target that is a natural target.

The number of receiving elements may be adapted to the number of different types of retro-reflective targets and/or to the number of different ranges of differences between the reference point and the target. In addition to the first and second receiving elements 112, 113, the first rotating wheel 110 can include a third receiving element (not shown). By using a first, second and third receiving element, the beam forming device can be adapted to at least three different beam forming set-ups to adapt the reflected beam and thereby the power received at the detector.

The number of transmitting elements may be adapted to the number of different types of retro-reflective targets and/or to the number of different ranges of differences between the reference point and the target. In addition to the first and second transmitting elements 116, 117, the second rotating wheel 114 can include a third transmitting element. By using a first, second and third transmitting element, the beam forming device can be adapted to at least three different beam forming set-ups to adapt the measuring beam and thereby the power received at the detector.

## Claims

1. Apparatus (40; 100) for measuring a distance between a reference point (REF) and a target (36-1, 36-2, 37-1, 37-2, 38-1, 38-2), the apparatus (40; 100) comprising:
▪ a distance measuring device (41) including a beam source (43) configured to emit a measuring beam (44), a detector (45) configured to receive a reflected beam (46), and a control unit (47) configured to determine the distance between the reference point and the target, at which the measuring beam was reflected and formed into the reflected beam, and
▪ a beam forming device (42; 102) including at least one receiving element (R1, R2, R3, R4; 112, 113) configured to adapt the reflected beam,
**characterized in that** the at least one receiving element (R1, R2, R3, R4; 112, 113) is movable in a motorized manner between a first position, in which the reflected beam is reduced to a first power that is non-zero, and a second position, in which the reflected beam is reduced to a second power that is non-zero, wherein the first power is different from the second power.

2. The apparatus of claim 1, wherein, while moving the at least one receiving element (R1, R2, R3, R4; 112, 113) from the first position to the second position, the power of the reflected beam that is received at the detector (45) is non-zero for positions between the first position and second position.

3. The apparatus of any one of claims 1 to 2, wherein the at least one receiving element (R1, R2, R3, R4; 112, 113) is configured to be arranged in a starting position, in which the power of the reflected beam at the detector (45) is non-zero, and configured to have a surface area arranged in the reflected beam that is increasing, when the receiving element (R1, R2, R3, R4; 112, 113) is moved from the starting position in a first direction (75), and a surface area arranged in the reflected beam that is decreasing, when the receiving element is moved from the starting position in a second direction (76) opposite to the first direction (75).

4. The apparatus of claim 3, wherein the at least one receiving element has a dynamic of change that is a progressive change, when moving in the first direction or second direction.

5. The apparatus of any one of claims 1 to 4, wherein the at least one receiving element (R1, R2, R3, R4) is formed as a pattern of openings.

6. The apparatus of any one of claims 1 to 5, wherein the at least one receiving element (R1, R2, R3, R4; 112, 113) includes a first receiving element (R1; 112) configured to adapt the reflected beam to a first type of targets and/or to a first range of distances, and a second receiving element (R2; 113) configured to adapt the reflected beam to a second type of targets and/or to a second range of distances.

7. The apparatus of claim 6, wherein the at least one receiving element further includes a third receiving element (R3) configured to adapt the reflected beam to a third type of targets and/or to a third range of distances.

8. The apparatus of any one of claims 1 to 7, wherein the beam forming device (42; 102) further includes at least one transmitting element (T1, T2, T3, T4; 116, 117) configured to adapt the measuring beam, the at least one transmitting element (T1, T2, T3, T4; 116, 117) is movable in a motorized manner between a first position and a second position that is different from the first position.

9. The apparatus of claim 8, wherein the at least one transmitting element includes a first transmitting element (T1; 116) configured to adapt the measuring beam (44) to a first type of targets and/or to a first range of distances, and a second transmitting element (T2; 117) configured to adapt the measuring beam (44) to a second type of targets and/or to a second range of distances.

10. The apparatus of claim 9, wherein the at least one transmitting element further includes a third transmitting element (T3) configured to adapt the measuring beam (44) to a third type of targets and/or to a third range of distances.

11. A method for measuring a distance between a reference point and a target (36-1, 36-2, 37-1, 37-2, 38-1, 38-2) using the apparatus (40; 100) according to any one of claims 1 to 10, the method is performed by a computer system of the apparatus (40; 100) and comprises the following steps:
▪ Instructing the apparatus (40; 100) to arrange the at least one receiving element () in a starting position,
▪ Instructing the distance measuring device (41; 101) to measure the distance between the reference point and the target, and
▪ Evaluating the measurement of the distance by comparing the power of the reflected beam received at the detector with a lower limit and an upper limit.

12. The method of claim 11, wherein the method is continued, if the power of the reflected beam received at the detector is below the lower limit or above the upper limit.

13. A computer program comprising instructions, which, when executed by a computer system, cause the computer system to carry out the method for measuring a distance between a reference point (REF) and a target (36-1, 36-2, 37-1, 37-2, 38-1, 38-2) according to any one of claims 11 to 12.
